# EUROPEAN PATENT SPECIFICATION

(11) **EP 4 362 593 B1**
(45) Date of publication and mention of the grant of the patent: **14.10.2026**
(21) Application number: 24155444.3
(22) Date of filing: 31.03.2011
(51) Int. Cl.: H04L 5/00, H04L 1/00, H04W 72/0453, H04W 72/56, H04W 72/542

(54) **PERIODIC CHANNEL STATE INFORMATION SIGNALING WITH CARRIER AGGREGATION**
PERIODISCHE KANALSTATUSINFORMATIONSSIGNALISIERUNG MIT TRÄGERAGGREGATION
SIGNALISATION D'INFORMATIONS D'ÉTAT DE CANAL PÉRIODIQUE AVEC AGRÉGATION DE PORTEUSES

(30) Priority: 01.04.2010 US 75257210
(43) Date of publication of application: 01.05.2024
(62) Document number(s) of the earlier application(s) in accordance with Art. 76 EPC: 22161541.2 / 4 037 240; 21156492.7 / 3 840 280; 19184807.6 / 3 567 793; 17195300.3 / 3 282 636; 16183124.3 / 3 107 238; 11711878.6 / 2 553 858
(73) Proprietor: Wireless Future Technologies Inc., Ottawa, ON K2B 8K2 (CA)
(72) Inventor: LUNTTILA, Timo Erkki, 02200 Espoo (FI); TIIROLA, Esa Tapani, 90450 Kempele (FI); PAJUKOSKI, Kari Pekka, 90240 Oulu (FI); HOOLI, Kari Juhani, 90540 Oulu (FI)
(74) Representative: J A Kemp LLP

(56) References cited:
- PANASONIC: "Periodic CQI Reporting for Carrier Aggregation", 3GPP DRAFT; R1-101258, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418770
- QUALCOMM INCORPORATED: "UL Power Control for Multicarrier Operation", 3GPP DRAFT; R1-100677 UL POWER CONTROL FOR MC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418270

## Description

The present invention relates generally to communications and particular to communications over multiple carriers. More particularly, in certain embodiments the present invention provide a mechanism for periodic channel state information signaling that employ carrier aggregation.

There has not been any significant prior work on related signaling details of periodic channel state information (CSI) with multiple parallel configurations in the case of multiple component carriers (CCs) . Contributions in the Third Generation Partnership Project (3GPP) tend to focus on extending the physical uplink control channel (PUCCH) payload beyond 11 bits, which would permit new, larger CSI formats.

Activation and deactivation of component carriers has been discussed. There has also been some discussion about the concept of primary and secondary component carriers in radio access network 2 (RAN2): primary component carrier (PCC), and secondary component carrier (SCC), respectively.
Panasonic: 3GPP TSG-RAN WG1 Meeting 60 Rl-101258, 22 - 26 February 2010 in San Francisco, U.S.A. discloses periodic CQI reporting in carrier aggregation. This document proposes a PUSCH based solution for multiple CQI reporting.
The invention is defined by the appended claims. All other references to embodiments are to be interpreted as examples useful for understanding the invention.

For proper understanding of the invention, reference should be made to the accompanying drawings, wherein:
Figure 1 illustrates an example of an implementation for handling collisions between channel state information reports.
Figure 2 illustrates a method according to certain embodiments of the present invention.
Figure 3 illustrates an apparatus according to certain embodiments of the present invention.
Figure 4 illustrates a technique for constructing rules for handling component carrier aggregation.

Channel State Information (CSI) feedback signaling with carrier aggregation may be useful in the Long Term Evolution (Advanced) (LTE-Advanced) of the Third Generation Partnership Project (3GPP) system, which may be a part of 3GPP LIE Release 10 (3GPP LIE Rel-10).

LTE-Advanced may serve as an evolution of the LIE Release 8 (Rel-8) system, fulfilling the International Telecommunication Union (ITU) Radiocommunication Sector (ITU-R) requirements for International Mobile Telecommunications-Advanced (IMT-Advanced). Carrier aggregation will be one technology component aimed at providing high bandwidth and peak data rates for the new system.

An efficient way to provide channel state information (CSI) reporting for multiple component carriers (CCs) can help to make efficient use of aggregated spectrum. Periodic CSI signaling aspects on the physical uplink control channel (PUCCH) and especially the rules and procedures related to handling multiple CSI reporting configurations will be discussed below.

Periodic reporting of CSI such as channel quality indicator (CQI), precoding matrix indicator (PMI), and rank indicator (RI) is the fundamental mode of feedback signaling in LTE Rel-8. The periodic CSI reports are carried on PUCCH, and the payload size is typically limited to a maximum of 11 bits. Due to the limited payload size, the reports typically contain little or no information about the frequency domain behavior of the channel.

With carrier aggregation, the need for periodic CSI may remain. LTE-Advanced (Rel-10) may, for example, support approximately five downlink (DL) CCs. Hence the straightforward expansion of Rel-8 reporting for multiple CCs would result in large reports (e.g. 5 * 11 bits = 55 bits). This may not be helpful from the uplink (UL) signaling point of view. First, such high overhead may limit uplink capacity considerably. Second, in many cases it may not be possible to guarantee sufficient UL coverage for such large payloads. Hence some compression methods may be used to reduce the UL signaling burden.

The most straightforward way to reduce the signaling load is to configure CSI reporting separately for each CC. This option can assist standardization, maximizing the commonality with Rel-8 specifications. Furthermore, the DL transmission mode can be configured separately for each DL CC, which would make joint encoding of the CSI reports complicated, or at least lead to a large number of supported options .

There are a number of ways that component carriers can be handled in a communication system. For example, there can be explicit activation and deactivation of configured downlink (DL) component carriers is done by media access control (MAC) signaling. There can also be implicit deactivation of configured DL component carriers. The configuration of a DL/UL component carrier can be within a user equipment's (UK's) aggregation capability. As a consequence, activation/deactivation as well can be within UE capability.

A newly configured component carrier can always be in a default state of "deactivated." In order to activate a newly configured component carrier, an activation command may be necessary. Furthermore, DL component carriers can be activated and deactivated individually. A single activation/deactivation command can activate/deactivate a subset of the configured DL component carriers.

The uplink (UL) primary component carrier (PCC) and DL PCC can be configured per UE. The UL PCC can be used for transmission of LI uplink control information. In certain embodiments, the DL PCC cannot be de-activated. Reestablishment can be triggered when the DL PCC experiences radio link failure (RLE), as opposed to when other DL CCs experience RLE. These implementations, however, are merely examples of how component carriers can be handled.

The following discussion focuses on the rules and procedures related to handling multiple CSI reporting configurations. Such rules for handling multiple CSI reporting configurations may be useful when transmitting a CSI for multiple CCs simultaneously in the same subframe. This situation may be described as being the state that exists when multiple configurations collide.

The rules and procedures may relate to handling periodic CSI reporting for carrier aggregation using PUCCH with multiple parallel configurations. The multiple parallel configurations may be CC-specific.

For each configured DL CC, a periodic CSI reporting mode can be configured. Reporting disabled is here considered as a reporting mode, a special case of configuration. In other words, the reporting disabled case can be considered a periodic report having the frequency of "never." The configuration can be done using RRC signaling and includes parameters such as periodicity, subframe offset, reporting mode, PUCCH resource used for reporting *etc.*

For the primary component carrier (PCC) the UE can start reporting CQI after it has received the CQI configuration via radio resource control (RRC) signaling. This follows similar procedures as in LTE Rel-8.

For the secondary component carriers (SCC) the UE can start to report CQI according to the RRC configuration after it has received an activation command for the given CC with media access control (MAC) signaling.

In the case of CC deactivation, the UE can stop reporting CSI for that CC. In other words, there may be no requirement that the UE report regarding inactive CCs.

In certain embodiments, when the periodic reports for two or more CCs would collide, the following complementary rules take place. The rules are numbered for the sake of identification. Unless otherwise noted, one should not treat the numbers as though they were setting forth a fixed sequence, such that, for example, 2 must come after 1 and before 3 .

Option 1 is multiplexing. In this option, when the PUCCH resources for the colliding CSI reports are located on the same or the adjacent PRB, all the CSI reports can be sent simultaneously. Each UE may be configured to omit this option and always perform the dropping of colliding CSI reports according to the following options, which involve prioritization .

Option 2 gives infrequent reports a priority. In this option, the CC configuration with lowest periodicity is prioritized and the other simultaneous reports are omitted. In the case of equal periodicity, a CSI corresponding to a predetermined CC is sent while the CSI (s) corresponding to other CC(s) is/are dropped, similar to Option 4 discussed below.

Option 3 gives rank indicators priority. In this option, a report containing RI is prioritized over CQI/PMI. In the case when the need to transmit them simultaneously occurs, CQI/PMI is dropped.

Option 4 ranks different CCs separately. The priority order for different CCs can be configured separately. This can be done with e.g. RRC configuration. The configuration indicates in which order the CSI from different CCs is prioritized. In the case of collision the CSI for the CC with higher priority is sent while the other one is dropped.

Option 5 gives priority to primary component carriers over secondary component carriers. In this option, CSI reports for PCC are prioritized over SCC.

Various combinations of different options are also possible. For example. Option 2 and Option 3 can be combined. Option 1 can be also combined with Option 2, 3, 4 or 5 in the case that some but not all CSI reports are located on the same or the adjacent PRB. Thus, for example, a first single CSI report according to one of options 2-5 is selected, and after that other CSI reports on same or adjacent PRB are also selected for transmission.

The reporting configuration for the DL PCC can follows the Rel-8 principles. For the SCC(s) the CSI reporting can be masked with the activation/deactivation command received via MAC signaling. There can be, for example, a bitmap indicating which of the SCCs are activated or deactivated.

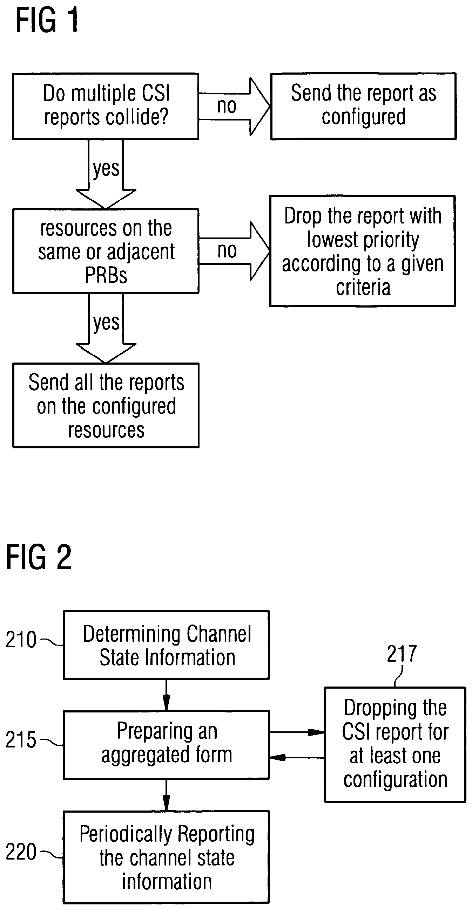

An example of an implementation for handling collisions between CSI reports can be summarized with the block diagram shown in Figure 1. The embodiment of Figure 1 shows a decision tree, which can be one way in which certain embodiments of the present invention is implemented.

As shown in Figure 1, when the need arises to transmit CSI reports for two or more CCs simultaneously occurs (first yes branch from the top of the diagram) , a device can first check whether the PUCCH resources configured for transmission of the CSI reports are on a single, or alternatively on adjacent, PRBs. One reason for imposing such a restriction is that transmission on multiple non-adjacent PUCCHs could violate single-carrier properties, resulting in increased cubic metric and out-of-band emissions.

if the colliding reports meet the criteria, as illustrated, for example, in the second yes branch from the top of the diagram, the reports are sent according to their respective configurations. If the colliding reports do not meet the criteria, as illustrated for example, in the lower no branch, only the reports with highest priority are sent. To determine the highest priority, options 2, 3, 4, or 5, discussed above or a combination thereof can be employed.

Alternatively, the multiplexing functionality may also be configurable. For example, one can limit a cell edge user equipment (UE) not to send more than one CSI report at a time in any case.

The condition for concurrent transmission of multiple PUCCH Format 2/2a/2b resources can be formulated in the following way (NxPUCCH Format 2/2a/2b):

First, a physical resource block (PRB) index m can be defined for a k^{th} PUCCH Format 2/2a/2b resource as $≫ ! \left(*\right) = L ≫ {Scc}_{B} \left(i-\right) / N , tJ ,$ where _{ftpuccH} i^{s} the higher-layer configured resource index for a periodic CSI transmitted on PUCCH and N^{™} is the number of sub-carriers (SC) per PRB (there may be 12 sub-carriers per resource block), respectively.

The criteria for concurrent transmission of multiple PUCCH format 2/2a/2b resources can be formulated as $\left.m\left(k\right) e\b, \left(b+2n\right)\right] ,$ where b is an integer and n e [0,1,..., N] where N is a predefined integer. Integer b can be defined as b=min(m(k)). This criteria ensures that PUCCH resources transmitted at the same time are located on the same side of the system bandwidth.

There are two special cases with n=0 and n=l:
n=0: PUCCH resources are located on the same PRB; and
n=l: PUCCH resources are located on adjacentPRBs.

In principle, PUCCH resources can be located on multi ple adjacent PRBs. To also cover this case, the criteria can be checked sequentially: sort m(k) in increasing order, N=l, b=min(m(k)); and starting from smallest m(k), check criteria. If it is filled, update N=m(k)+1 for current k and continue.

Certain embodiments of the present invention may have various advantages. For example, certain embodiments of the present invention may permit independent configuration per CC, which may permit reuse of the Rel-8 functionality as much as possible. Additionally, since there are no existing solutions for handling collisions between CSI reports, the approach above may be implemented widely, such as by means of a standard. Moreover, allowing for multiplexing of CSIs when they are transmitted on a single or adjacent PRBs brings advantages in terms of performance, assuming that sufficient coverage can be guaranteed.

Figure 2 illustrates a method according to certain embodiments of the present invention. The method can be performed by an apparatus such as a terminal, a user equipment, or a mobile node. The method of figure 2 includes determining 210, in an apparatus, channel state information. The channel state information includes channel state information of a plurality of component carriers. The method also includes periodically reporting 220, by the apparatus, the channel state information comprising a plurality of reports in an aggregated form. An aggregated form can include several independent reports. The periodically reporting 220 can be performed via a physical uplink control channel.

The method can include preparing 215 the aggregated form. The preparing 215 can include dropping 217 at least the channel state information report for at least one configuration based on a priority. It should be noted that a configuration for a component carrier may include more than one report.

After channel state information of a first component carrier is selected for inclusion in the aggregated form based on a priority, other channel state information corresponding to component carriers that have the same or an adjacent physical resource block can also be selected for inclusion in the aggregated form. The priority can be, for example, lowest periodicity of reporting. In other words, the highest priority can be assigned to a component carrier whose report is to be sent the most infrequently.

As may be understood from the discussion above, a computer-readable non-transitory medium can be encoded with information that, when executed in hardware, performs a process corresponding to the process disclosed in figure 2, or any other process discussed herein. By non-transitory medium, it is meant that the medium is not a transitory signal. Examples of non-transitory mediums include a computer-readable medium, a computer distribution medium, a computer-readable storage medium, and a computer program product.

Channel state information for component carrier configurations having equal periodicity can be prioritized according to a predetermined ranking for component carriers. Channel state information for component carrier configurations comprising a rank indicator can be prioritized above channel state information for component carrier configurations comprising channel quality indicator or precoding matrix indicator. Alternatively, or in addition, a plurality of component carrier configurations can be individually assigned a predetermined priority. Channel state information for primary component carriers can be prioritized over channel state information for secondary component carriers.

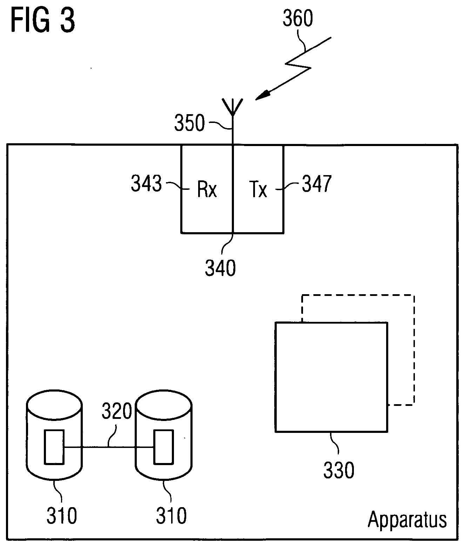

Figure 3 illustrates an apparatus according to certain embodiments of the present invention. The apparatus can include at least one memory 310 including computer program code 320. The apparatus can also include at least one processor 330. The apparatus can be configured to communicate using a transceiver 340, including a receiver portion 343 and a transmitter portion 347, with a base station or enhanced node B (not illustrated. The apparatus can use an antenna 350 to communicate with the base station or other network element over a wireless link 360, which may be a cellular radio link. The apparatus can be configured to prepare reports regarding, for example, downlink (DL) quality for component carriers of the wireless link 360.

In the process, the at least one memory 310 and the computer program code 320 can be configured to, with the at least one processor 330, cause the apparatus at least to determine channel state information. The channel state information can be channel state information of a plurality of component carriers. The at least one memory 310 and the computer program code 320 can also be configured to, with the at least one processor 330, cause the apparatus at least to periodically report the channel state information comprising a plurality of reports in an aggregated form.

The at least one memory 310 may be any suitable form of memory, such as the onboard memory of a controller chip, a hard drive, various types of Random Access Memory (RAM), or Read-Only Memory (ROM). The computer program code 320 can be any appropriate form of computer instructions. The computer program code 320 may be provided in a compiled or interpreted form. The processor 330 can be any suitable processing device, such as but not limited to a Central Processing Unit (CPU), controller, or Application Specific Integrated Circuit (ASIC).

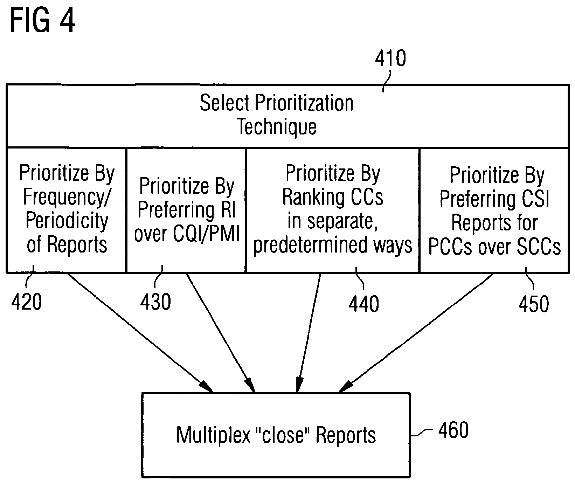

Figure 4 illustrates a technique for constructing rules for handling component carrier aggregation. As illustrated in Figure 4, the technique can begin by selecting 410 a prioritization technique from a variety of techniques. Four such techniques are illustrated, although other techniques are permitted.

The first of the four techniques shown is to prioritize 420 by frequency/periodicity of reports. That is to say, a CC report that is to be infrequently reported may be given a higher priority than frequently reported CC reports or *vice versa.*

The second of the four techniques shown is to prioritize 430 by preferring RI over CGI/PMI (or *vice versa*). This technique permit the most important aspects of a CC report to be given priority over those that the system considers less important.

To prioritize 440 by ranking CCs in separate, predetermined ways is the third of the four techniques shown in Figure 4. In this technique, each individual CC may be assigned a predetermined ranking and may be prioritized according to the predetermined ranking.

The fourth technique of the four techniques in Figure 4 is to prioritize 450 by preferring CSI reports for PCCs over those for SCCs. This technique can permit the reports for PCCs to be given a preference, when it is not feasible to report on both PCCs and SCCs. Like the other priority schemes it can be reversed, if desired, such that SCCs are given a priority over PCCs.

Finally, in addition to the selected CC report of the various available CC reports, the system can multiplex 460 any "close" reports. In this case, "close" can refer to reports for the same or an adjacent physical resource block (PRB) .

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention as defined by the claims. For example, although certain embodiments of the present invention have been discussed in relation to 3GPP system, it should be understood that the present invention may be applied to other system such as the Evolved Universal Terrestrial Radio Network (E-UTRAN) and the like. In order to determine the metes and bounds of the invention, therefore, reference should be made to the appended claims.

## Claims

1. A system comprising:
a base station; and
a user equipment, UE;
when two channel state information, CSI, reports are to be transmitted on a physical uplink control channel, and each of the two CSI reports relate to a respective one of a plurality of component carriers, and one of the two CSI reports is a CSI report containing a Rank Indicator, RI, and one of the two CSI reports is a CSI report containing a Channel Quality Indicator, CQI, the UE is operable to transmit, to the base station, only the CSI report containing the RI as a first prioritized CSI report on the physical uplink channel; and **characterised by**
when two CSI reports are to be transmitted on a physical uplink control channel, and each of the two CSI reports relate to a respective one of a plurality of component carriers, and each of the two CSI reports is a CSI report containing a RI, the UE is operable to transmit, to the base station, only the CSI report containing a RI associated with a highest priority component carrier as a second prioritized CSI report.

2. The system of claim 1, wherein the base station is operable to generate radio resource control, RRC, information for the UE, wherein the RRC information includes an indication of the highest priority component carrier, and to transmit the RRC information to the UE.

3. The system of claim 1, wherein the base station is further operable to generate a medium access control, MAC, message for the UE to activate one or more component carriers, and to transmit the MAC message to the UE.

4. The system of claim 1, wherein the base station is operable to receive. from the UE, the first prioritized CSI report containing the RI on the physical uplink channel when the UE has two CSI reports to be transmitted on the physical uplink control channel, and each of the two CSI reports relate to a respective one of the plurality of component carriers, and one of the two CSI reports is a CSI report containing a RI, and one of the two CSI reports is a CSI report containing a CQI.

5. The system of claim 1, wherein the base station is operable to receive, from the UE, the second prioritized CSI report containing the RI associated with a highest priority component carrier when the UE has two CSI reports to be transmitted on the physical uplink control channel, and each of the two CSI reports relate to a respective one of the plurality of component carriers, and each of the two CSI reports is a CSI report containing a RI.

6. A method for use in a base station, the method comprising:
receiving, from a user equipment, UE, on a physical uplink control channel, a first prioritized channel state information, CSI, report containing a rank indicator, RI, wherein the received first prioritized CSI report is one of two first CSI reports of the UE related to a respective one of a plurality of component carriers, and one of the two first CSI reports is a CSI report containing a RI, and one of the two first CSI reports is a CSI report containing a Channel Quality Indicator, CQI; and **characterised by**
receiving, from the UE on a physical uplink control channel, a second prioritized CSI report containing a RI associated with a highest priority component carrier of the UE, wherein the received second prioritized CSI report is one of two second CSI reports of the UE related to a respective one of a plurality of component carriers, and each of the two second CSI reports is a CSI report containing a RI.

7. The method of claim 6, further comprising:
transmitting radio resource control, RRC, information to the UE, wherein the RRC information includes an indication of the highest priority component carrier.

8. The method of claim 6, further comprising:
transmitting a medium access control, MAC, message to the UE to activate one or more component carriers.

## Patentansprüche

1. System, das umfasst:
eine Basisstation; und
eine Benutzervorrichtung (User Equipment, UE);
wenn zwei Kanalzustandsinformations- (Channel State Information, CSI) Berichte auf einem physikalischen Uplink-Steuerkanal übertragen werden sollen, und sich jeder der beiden CSI-Berichte auf einen jeweiligen einer Vielzahl von Komponententrägern bezieht, und einer der beiden CSI-Berichte ein CSI-Bericht ist, der einen Rangindikator (RI) enthält, und einer der beiden CSI-Berichte ein CSI-Bericht ist, der einen Kanalqualitätsindikator (Channel Quality Indicator, CQI) enthält, wobei die UE so betreibbar ist, dass sie an die Basisstation nur den CSI-Bericht, der den RI enthält, als ersten priorisierten CSI-Bericht auf dem physikalischen Uplink-Kanal überträgt; und **gekennzeichnet durch**
wenn zwei CSI-Berichte auf einem physikalischen Uplink-Steuerkanal übertragen werden sollen, und sich jeder der beiden CSI-Berichte auf einen jeweiligen einer Vielzahl von Komponententrägern bezieht, und wobei jeder der beiden CSI-Berichte ein CSI-Bericht ist, der einen RI enthält, und die UE so betreibbar ist, dass sie an die Basisstation nur den CSI-Bericht überträgt, der einen RI enthält, der einem Komponententräger mit der höchsten Priorität als zweiten priorisierten CSI-Bericht zugeordnet ist.

2. System nach Anspruch 1, wobei die Basisstation dafür ausgelegt ist, Funkressourcensteuerungs- (Radio Resource Control, RRC) Informationen für die UE zu erzeugen, wobei die RRC-Informationen eine Angabe des Komponententrägers mit der höchsten Priorität enthalten, und die RRC-Informationen an die UE zu übertragen.

3. System nach Anspruch 1, wobei die Basisstation ferner in der Lage ist, eine Medienzugriffskontoll- (Medium Access Control, MAC) Nachricht für die UE zu erzeugen, um einen oder mehrere Komponententräger zu aktivieren, und die MAC-Nachricht an die UE zu senden.

4. System nach Anspruch 1, wobei die Basisstation dafür ausgelegt ist, von der UE den ersten priorisierten CSI-Bericht zu empfangen, der den RI auf dem physikalischen Uplink-Kanal enthält, wenn die UE zwei CSI-Berichte hat, die auf dem physikalischen Uplink-Steuerkanal übertragen werden sollen, und sich jeder der beiden CSI-Berichte auf einen jeweiligen der Vielzahl von Komponententrägern bezieht, und einer der beiden CSI-Berichte ein CSI-Bericht ist, der einen RI enthält, und einer der beiden CSI-Berichte ein CSI-Bericht ist, der einen CQI enthält.

5. System nach Anspruch 1, wobei die Basisstation dafür ausgelegt ist, von der UE den zweiten priorisierten CSI-Bericht zu empfangen, der den RI enthält, der einem Komponententräger mit der höchsten Priorität zugeordnet ist, wenn die UE zwei CSI-Berichte hat, die auf dem physikalischen Uplink-Steuerkanal zu übertragen sind, und sich jeder der beiden CSI-Berichte auf einen jeweiligen der Vielzahl von Komponententrägern bezieht, und jeder der beiden CSI-Berichte ein CSI-Bericht ist, der einen RI enthält.

6. Verfahren zur Verwendung in einer Basisstation, wobei das Verfahren umfasst:
Empfangen eines ersten priorisierten Berichts über die Kanalzustandsinformationen (CSI) mit einem Rangindikator (RI) von einer Benutzervorrichtung (UE) auf einem physikalischen Uplink-Steuerkanal, wobei der empfangene erste priorisierte CSI-Bericht einer von zwei ersten CSI-Berichten der UE ist, die sich jeweils auf einen der Vielzahl von Komponententrägern beziehen, und einer der beiden ersten CSI-Berichte ein CSI-Bericht ist, der einen RI enthält, und einer der beiden ersten CSI-Berichte ein CSI-Bericht ist, der einen Kanalqualitätsindikator, CQI, enthält; und **gekennzeichnet durch**
Empfangen eines zweiten priorisierten CSI-Berichts von der UE über einen physikalischen Uplink-Steuerkanal, der einen RI enthält, der einem Komponententräger mit der höchsten Priorität der UE zugeordnet ist, wobei der empfangene erste priorisierte CSI-Bericht einer von zwei ersten CSI-Berichten der UE ist, die sich jeweils auf einen der vielen Komponententräger beziehen, und einer der beiden ersten CSI-Berichte ein CSI-Bericht ist, der einen RI enthält, und jeder der beiden CSI-Berichte ein CSI-Bericht ist, der einen RI enthält.

7. Verfahren nach Anspruch 6, das ferner umfasst:
Senden von Funkressourcensteuerungs-, RRC, Informationen an die UE, wobei die RRC-Informationen eine Angabe des Komponententrägers mit der höchsten Priorität enthalten.

8. Verfahren nach Anspruch 6, das ferner umfasst:
Senden einer Medienzugriffssteuerungs-, MAC, Nachricht an die UE, um einen oder mehrere Komponententräger zu aktivieren.

## Revendications

1. Système comprenant :
une station de base ; et
un équipement utilisateur, UE ;
lorsque deux rapports d'informations d'état de canal, CSI, doivent être transmis sur un canal de commande physique de liaison montante, et que chacun des deux rapports CSI se rapporte à une porteuse composante respective parmi une pluralité de porteuses composantes, et qu'un des deux rapports CSI est un rapport CSI contenant un indicateur de rang, RI, et qu'un des deux rapports CSI est un rapport CSI contenant un indicateur de qualité de canal, CQI, l'UE est capable de transmettre à la station de base uniquement le rapport CSI contenant le RI en tant que premier rapport CSI prioritaire sur le canal physique de liaison montante ; et **caractérisé en ce que**, lorsque deux rapports CSI doivent être transmis sur un canal de commande physique de liaison montante, et que chacun des deux rapports CSI se rapporte à une porteuse composante respective parmi une pluralité de porteuses composantes, et que chacun des deux rapports CSI est un rapport CSI contenant un RI, l'UE est capable de transmettre, à la station de base, uniquement le rapport CSI contenant un RI associé à la porteuse composante ayant la priorité la plus élevée en tant que deuxième rapport CSI prioritaire.

2. Système selon la revendication 1, dans lequel la station de base est capable de générer des informations de commande de ressources radio, RRC, pour l'UE, dans lequel les informations RRC comprennent une indication de la porteuse composante ayant la priorité la plus élevée, et de transmettre les informations RRC à l'UE.

3. Système selon la revendication 1, dans lequel la station de base est en outre capable de générer un message de commande d'accès au support, MAC, pour l'UE afin d'activer une ou plusieurs porteuses composantes, et de transmettre le message MAC à l'UE.

4. Système selon la revendication 1, dans lequel la station de base est capable de recevoir de l'UE, le premier rapport CSI prioritaire contenant le RI sur le canal physique de liaison montante lorsque l'UE présente deux rapports CSI à transmettre sur le canal de commande physique de liaison montante, et que chacun des deux rapports CSI se rapporte à une porteuse composante respective parmi la pluralité de porteuses composantes, et qu'un des deux rapports CSI est un rapport CSI contenant un RI, et un des deux rapports CSI est un rapport CSI contenant un CQI.

5. Système selon la revendication 1, dans lequel la station de base est capable de recevoir de l'UE, le deuxième rapport CSI prioritaire contenant le RI associé à une porteuse composante ayant la priorité la plus élevée lorsque l'UE présente deux rapports CSI à transmettre sur le canal de commande physique de liaison montante, et que chacun des deux rapports CSI se rapporte à une porteuse composante respective parmi la pluralité de porteuses composantes, et que chacun des deux rapports CSI est un rapport CSI contenant un RI.

6. Procédé destiné à être utilisé dans une station de base, le procédé comprenant :
la réception, d'un équipement utilisateur, UE, sur un canal de commande physique de liaison montante, d'un premier rapport d'informations d'état de canal prioritaire, CSI, contenant un indicateur de rang, RI, dans lequel le premier rapport CSI prioritaire reçu est un des deux premiers rapports CSI de l'UE se rapportant à une porteuse composante respective parmi une pluralité de porteuses composantes, et un des deux premiers rapports CSI est un rapport CSI contenant un RI, et un des deux premiers rapports CSI est un rapport CSI contenant un indicateur de qualité de canal, CQI ; et **caractérisé par**
la réception, de l'UE sur un canal de commande physique de liaison montante, d'un deuxième rapport CSI prioritaire contenant un RI associé à une porteuse composante ayant la priorité la plus élevée de l'UE, dans lequel le deuxième rapport CSI prioritaire reçu est un des deux deuxièmes rapports CSI de l'UE se rapportant à une porteuse composante respective parmi une pluralité de porteuses composantes, et chacun des deux deuxièmes rapports CSI est un rapport CSI contenant un RI.

7. Procédé selon la revendication 6, comprenant en outre :
la transmission d'informations de commande de ressources radio, RRC, à l'UE, dans lequel les informations RRC comprennent une indication de la porteuse composante ayant la priorité la plus élevée.

8. Procédé selon la revendication 6, comprenant en outre :
la transmission d'un message de commande d'accès au support, MAC, à l'UE afin d'activer une ou plusieurs porteuses composantes.
